# EUROPÄISCHE PATENTANMELDUNG

(11) **EP 1 790 745 A1**
(43) Veröffentlichungstag der Anmeldung: **30.05.2007**
(21) Anmeldenummer: 05025899.5
(22) Anmeldetag: 28.11.2005
(51) Int. Cl.: C22C 19/05, B23K 31/02, B23K 35/30

(54) **Verfahren zum Reparieren von Rissen in Bauteilen und Lotmaterial zum Löten von Bauteilen**

(71) Anmelder: SIEMENS AKTIENGESELLSCHAFT, 80333 München (DE); MTU Aero Engines GmbH, 80995 München (DE)
(72) Erfinder: Singer, Robert, Prof., 91054 Erlangen (DE); Volek, Andreas, Dr., 91056 Erlangen (DE)

(57) **Zusammenfassung**

Es wird ein Verfahren zum Reparieren von Bauteilen (1), die aus einer Superlegierung bestehen, zur Verfügung gestellt. Das Verfahren umfasst die Schritte:
- Versehen der zu reparierende Stelle (3) mit einem Lotmaterial (7)
- Erwärmen der mit dem Lotmaterial (7) versehenen zu reparierenden Stelle (3) bis zum Schmelzen des Lotmaterials (7) und
- Erstarrenlassen des geschmolzenen Lotmaterials (7). Als Lotmaterial (7) kommt eine in ihrer Durchschnittszusammensetzung der Legierung des Bauteils (1) entsprechende Pulvermischung zur Anwendung, die wenigstens als eine Pulversorte ein elementares Pulver der Legierung des Bauteils (1) und/oder eine Vorlegierung der Legierung des Bauteils (1) umfasst.

## Beschreibung

Die vorliegende Erfindung betrifft ein Verfahren zum Reparieren von Rissen in Bauteilen, die aus einer Superlegierung bestehen, insbesondere aus einer Superlegierung mit einer gerichteten Mikrostruktur, wobei das Verfahren dann derart ausgestaltet ist, dass ein reparierter Riss ebenfalls eine gerichtete Mikrostruktur aufweist. Daneben betrifft die Erfindung ein Lotmaterial zum Löten von Bauteilen, die aus einer Superlegierung bestehen, insbesondere aus einer solchen mit einer gerichteten Mikrostruktur.

Die Verbesserung von Flugzeuggasturbinen und die elektrische Energieerzeugung mittels stationärer Gasturbinen rückt aufgrund der mit den Gasturbinen realisierbaren hohen Wirkungsgrade immer mehr in den Vordergrund. In einer Gasturbine wird angesaugte Luft verdichtet und einer Brennkammer zugeführt. In der Brennkammer wird ein Gemisch aus der zugeführten Luft und einem Brennstoff gezündet und die unter hohem Druck stehenden heißen Verbrennungsabgase einem Turbinenabschnitt der Gasturbine zugeleitet. Die Verbrennungsabgase dienen dabei als Arbeitsmedium, welches die Turbine in Rotation, typischerweise mit einer Frequenz von 50 bis 60 Hz, versetzt. Das Arbeitsmedium tritt hierbei mit einer Temperatur von rund 1200°C auf die ersten Turbinenschaufeln auf. In Folge der Rotation sind die heißen Turbinenschaufeln hohen statischen Lasten durch Fliehkräfte ausgesetzt. Zudem werden durch das einströmende heiße Gas dynamische Lasten hervorgerufen. Je nach verwendetem Brennstoff kommen zudem mehr oder minder starke korrosive Belastungen auf die Bauteile des Turbinenabschnittes, insbesondere auf die Turbinenschaufeln zu.

Beispielsweise die Laufschaufeln der ersten Laufschaufelreihe der Turbine werden deshalb häufig aus so genannten hochwarmfesten Superlegierungen auf Nickel-, Kobalt- oder Eisenbasis hergestellt. Solche Superlegierungen sind beispielsweise aus der EP 1 204 776 B1, der EP 1 306 454, der EP 1 319 729 A1, der WO 99/67435 oder der WO 00/44949 bekannt.

Aufgrund des üblicherweise äußerst komplexen Schaufeldesigns und der relativ geringen Eignung derartiger Legierungen zum Umformen, erfolgt die Herstellung von Turbinenschaufeln im Vakuumgießverfahren. Der Erstarrungsablauf wird dabei so gesteuert, dass eine gerichtete Mikrostruktur im Bauteil entsteht, die gegenüber den später auftretenden Lasten eine besonders vorteilhafte Orientierung aufweist. Unter dem Begriff gerichteter Mikrostruktur sind sowohl einkristalline Strukturen als auch Strukturen mit einer Kornstruktur, in der die Ausdehnung der Körner eine gemeinsame Vorzugsrichtung aufweist, anzusehen. Im letztgenannten Fall können die Körner beispielsweise in einer bestimmten Vorzugsrichtung eine größere Abmessung aufweisen als in den übrigen Richtungen (sog. Stängelkristalle). Bauteile mit einer derartigen Kornstruktur werden auch als gerichtet erstarrte Bauteile (directionally solidified) bezeichnet.

Die ständigen hohen statischen und dynamischen Lasten von Turbinenbauteilen und insbesondere von Laufschaufeln des Turbinenabschnittes, führen dazu, dass diese in regelmäßigen Abständen einer Revision unterzogen werden, um sie auf ihre Eignung für einen weiteren Einsatz hin zu begutachten. Beschädigte Bauteile werden im Rahmen dieses Revisionsprozesses entweder ausgetauscht oder repariert. Neben starken Materialverlusten durch Korrosion sind insbesondere Ermüdungsrisse die am häufigsten auftretenden Ursachen für einen Austausch der Bauteile. Insbesondere bei Laufschaufeln treten derartige Ermüdungsrisse quer zur Schaufellängsachse auf.

Aufgrund der hohen Material- und Herstellungskosten für Turbinenbauteile mit einer gerichteten Mikrostruktur muss ein Kraftwerksbetreiber oder ein Hersteller für Flugzeuggasturbinen für die Instandhaltung einer Gasturbinenanlage relativ hohe Kosten einkalkulieren, bspw. für den Austausch von Turbinenschaufeln. Vor dem Hintergrund eines steigenden Kostendruckes werden daher Reparaturverfahren, welche die Betriebsfähigkeit eines beschädigten Turbinenbauteils, insbesondere einer beschädigten Laufschaufel, wiederherstellt, zunehmend attraktiver. Ein repariertes Bauteil kann dann wieder in die Gasturbinenanlage eingebaut werden und einen weiteren Einsatz bis zum nächsten Revisionsprozess erfahren.

Eine Möglichkeit, beschädigte Bauteile zu reparieren ist das Löten. Dabei wird ein Lotmaterial beispielsweise in einen Riss im Bauteil eingebracht und mittels Wärmeeinwirkung mit dem Material der Superlegierung verbunden. Der Lötprozess kann isoterm, also bei konstanter Temperatur, oder unter Verwendung eines Temperaturgradienten erfolgen.

Ein Verfahren zum isotermen Hartlöten von einkristallinen Gegenständen ist beispielsweise in EP 1 258 545 beschrieben. Darin wird ein Lotmaterial, welches in seiner Zusammensetzung der Superlegierung des Bauteils ähnelt, in einen Riss eingefüllt und über einen längeren Zeitraum auf eine Temperatur oberhalb des Schmelzpunktes des Lotmaterials gehalten. Dem Lotmaterial ist Bor zur Absenkung der Schmelztemperatur beigefügt. Aufgrund der hohen Temperatur finden Diffusionsprozesse statt, die dazu führen, dass ein Konzentrationsausgleich zwischen dem Lotmaterial und der Superlegierung herbeigeführt wird, die zu einem Erstarren des Lotmaterials führt. Dabei nimmt das erstarrte Lotmaterial bei Spaltbreiten bis ca. 200 µm die gerichtete Mikrostruktur der umgebenden Superlegierung an. Das Bor kann jedoch zur Bildung spröder Boride führen, welche die Eigenschaften des Bauteils im Bereich der reparierten Stelle beeinträchtigen. Außerdem ist das Verfahren für Spaltbreiten über ca. 200 µm nicht geeignet.

Ein Verfahren zum Löten von gerichtet erstarrten oder einkristallinen Komponenten unter Verwendung eines Temperaturgradienten ist beispielsweise in EP 0 870 566 beschrieben. In diesem Verfahren wird auf die zu reparierende Stelle eine Lotlegierung aufgelegt, die beispielsweise aus dem Grundwerkstoff zu reparierenden Teiles und einer Zugabe eines oder mehrerer schmelzpunktreduzierender Elemente besteht. Das zu reparierende Teil wird mit der aufgelegten Lotlegierung durch eine beheizte Zone bewegt, wobei in dieser beheizten Zone die durch die Heizung aufgebrachte Temperatur über der Schmelztemperatur der Lotlegierung liegt, aber kleiner als die örtliche Voraufschmelz-Temperatur des Teiles ist. Dadurch kommt es nicht zum partiellen Aufschmelzen der Superlegierung des zu reparierenden Teiles. Aufgrund der Bewegung wird im Lötgut ein thermischer Gradient erzeugt, der zu einer gerichteten Erstarrung des Lötgutes führt. Auch in diesem Fall werden dem Lötgut schmelzpunktherabsetzende Komponenten hinzugefügt, die, beispielsweise im Falle von Bor, die Eigenschaften der reparierten Stelle negativ beeinflussen können.

Aufgabe der vorliegenden Erfindung ist es, ein gegenüber dem Stand der Technik vorteilhaftes Verfahren zum Reparieren von Bauteilen, die aus einer Superlegierung bestehen, insbesondere aus einer Superlegierung mit einer gerichteten Mikrostruktur, zur Verfügung zu stellen.

Es ist eine weitere Aufgabe der vorliegenden Erfindung, ein Lotmaterial zur Verfügung zu stellen, dass sich vorteilhaft beim Löten von Superlegierungen, insbesondere von Superlegierungen mit einer gerichteten Mikrostruktur, verwenden lässt.

Die erste Aufgabe wird durch ein Verfahren zum Reparieren von Bauteilen nach Anspruch 1 gelöst, die zweite Aufgabe durch ein Lotmaterial nach Anspruch 9. Die abhängigen Ansprüche enthalten vorteilhafte Ausgestaltungen des erfindungsgemäßen Verfahrens.

Das erfindungsgemäße Verfahren ist ein Verfahren zum Reparieren von Bauteilen, die aus einer Superlegierung bestehen. Insbesondere kann die Superlegierung eine gerichtete Mikrostruktur aufweisen, und das Verfahren kann derart ausgestaltet, dass eine reparierte Stelle ebenfalls eine gerichtete Mikrostruktur aufweist. Unter einer gerichteten Mikrostruktur soll im Rahmen der vorliegenden Anmeldung eine einkristalline oder eine stängelkristalline Struktur zu verstehen sein. Es umfasst die Schritte:

Versehen der zu reparierenden Stelle mit einem Lotmaterial. Dies kann beispielsweise durch Auf- oder Einbringen des Lotmaterials auf bzw. in einen Riss des Bauteils wie etwa einer Turbinenschaufel geschehen. Die mit dem Lotmaterial versehene zu reparierende Stelle wird bis zum Schmelzen des Lotmaterials erwärmt und anschließend wird das geschmolzene Lotmaterial erstarren gelassen. Im erfindungsgemäßen Verfahren kommt als Lotmaterial eine in ihrer Durchschnittszusammensetzung der Legierung, aus der das Bauteil gefertigt wurde, entsprechende Pulvermischung zur Anwendung, die wenigstens als eine Pulversorte ein elementares Pulver der Legierung des Bauteils und/oder ein Pulver aus einer Vorlegierung der Legierung des Bauteils umfasst. Elementares Pulver soll in diesem Zusammenhang bedeuten, dass diese Pulversorte aus einem einzigen Element besteht.

Das erfindungsgemäße Verfahren fußt auf der Erkenntnis, dass Superlegierungen aus einer Anzahl von Legierungselementen aufgebaut sind, unter denen auch solche Elemente sind, die in elementarer Form einen relativ niedrigen Schmelzpunkt haben. So finden beispielsweise Nickel-Basis-Superlegierungen Anwendung, die aus zwölf Legierungselementen aufgebaut sind. Eines dieser Legierungselemente ist beispielsweise Aluminium, welches einen Schmelzpunkt von 660°C hat. Wird nun das Lotmaterial so aufgebaut, dass die Pulvermischung im Durchschnitt der Basislegierung des Bauteils entspricht und wenigstens ein elementares Pulver umfasst, so bestehen bereits bei niedrigen Temperaturen transiente Flüssigkeitsfilme, die für eine optimale Anbindung des Lotmaterials an das Basismaterial sorgen. In der genannten Superlegierung wäre beispielsweise ein reines Aluminiumpulver als ein elementares Pulver des Lotmaterials geeignet. Im Verlauf des Lötprozesses werden dann nach und nach alle Legierungsanteile in den Lotspalt eingebaut und der Erstarrungsprozess eingeleitet. Ähnliches gilt bei der Verwendung eines Pulvers aus einer Vorlegierung der Legierung des Bauteils anstatt eines elementaren Pulvers. Es ist aber auch die Verwendung einer Pulverkombination aus einer Vorlegierung und einem oder mehreren elementaren Pulvern möglich.

Bereits wenn im erfindungsgemäßen Verfahren als Lotmaterial eine Kombination eines Lotmaterials, welches ein elementares Pulver und/oder eine Vorlegierung umfasst, mit einem herkömmlichen Lotmaterial, also einem, das Bor oder andere den Schmelzpunkt erniedrigende Elemente enthält, Verwendung findet, kann die Bildung spröder Phasen auf ein vertretbares Maß gesenkt werden. So kann die Zugabe der sonst zur Schmelzpunkterniedrigung verwendeten, schädlichen Elemente, insbesondere die Zugabe von Bor, reduziert werden oder sogar gänzlich entfallen.

Wenn das Lotmaterial ausschließlich aus elementaren Pulvern, die jeweils lediglich aus einem der in der Legierung enthaltenen Elemente bestehen, zusammengesetzt ist, fallen die Herstellungskosten für das Lotpulver sehr gering aus. Elementare Pulver sind in der Regel billiger als Legierungspulver. Wenn dagegen eine Vorlegierung Verwendung findet, sind die Herstellungskosten gegenüber dem zuvor genannten Fall höher, jedoch kann der Schmelzpunkt des Pulvers durch geeignete Zusammensetzung der Vorlegierung noch weiter erniedrigt werden. Zudem kann dadurch die Oxidationsneigung des Pulvers reduziert werden.

Das erfindungsgemäße Verfahren lässt sich insbesondere auf Bauteile anwenden, deren Superlegierungen Legierungen auf Nickel-, Kobalt- oder Eisenbasis sind, wobei das Lotmaterial ein oder mehrere elementare Pulver der Legierungsbestandteile und/oder eine Vorlegierung der Superlegierung umfasst.

Das Erstarrenlassen des geschmolzenen Lotmaterials kann bei konstant gehaltener Temperatur erfolgen, also in Form eines isotermen Erstarrens. Außerdem ist es auch möglich, das geschmolzene Lotmaterial unter Verwendung eines Temperaturgradienten erstarren zu lassen. Der Temperaturgradient ist vorteilhafterweise derart ausgerichtet, dass er in derjenigen Richtung verläuft, in der ein epitaktisches Kristallisieren und die gerichtete Mikrostruktur in der zu reparierenden Stelle herbeigeführt werden soll. Zum Erzeugen des Temperaturgradienten eignen sich unterschiedliche Heizverfahren. Insbesondere kann ein lokales Heizen mittels eines optischen oder induktiven Heizverfahrens oder mittels eines Elektronenstrahlheizverfahrens erfolgen, wobei die Heizquelle und das Bauteil relativ zueinander bewegt werden. In dieser Ausgestaltung kann die Orientierung der Mikrostruktur im verfestigten Lotmaterial durch die Bewegungsrichtung zwischen der Heizquelle und dem Bauteil festgelegt werden.

Ein erfindungsgemäßes Lotmaterial zum Löten von Bauteilen, die aus einer Superlegierung bestehen, insbesondere aus einer Superlegierung mit einer gerichteten Mikrostruktur, weist eine in ihrer Durchschnittszusammensetzung der Legierung des Bauteils entsprechende Pulvermischung auf, die wenigstens als eine Pulversorte ein elementares Pulver der Legierung des Bauteils und/oder eine Vorlegierung der Legierung des Bauteils umfasst. Das erfindungsgemäße Lotmaterial eignet sich insbesondere zur Verwendung im erfindungsgemäßen Verfahren, in dessen Zusammenhang bereits die Vorteile des erfindungsgemäßen Pulvers dargelegt worden sind.

Insbesondere kann das Lotmaterial auch ausschließlich aus elementaren Pulvern zusammengesetzt sein, welche jeweils aus einem Element der Legierung des Bauteils bestehen.

Das Lotmaterial kann auch ein Pulver umfassen, das aus einer Vorlegierung besteht, die einige Legierungsbestandteile der Legierung des Bauteils enthält.

Als zu lötende Superlegierungen kommen insbesondere Superlegierungen auf Nickel-, Kobalt- oder Eisenbasis in Frage.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
Figur 1 zeigt beispielhaft eine Gasturbine in einem Längsteilschnitt.
Figur 2 zeigt in perspektivischer Ansicht eine Laufschaufel oder Leitschaufel einer Strömungsmaschine.
Figur 3 zeigt eine Brennkammer einer Gasturbine.

Die Figuren 4 bis 7 zeigen ein Ausführungsbeispiel für das erfindungsgemäße Verfahren.

Die Figur 8 zeigt eine Auflistung von Superlegierungen.

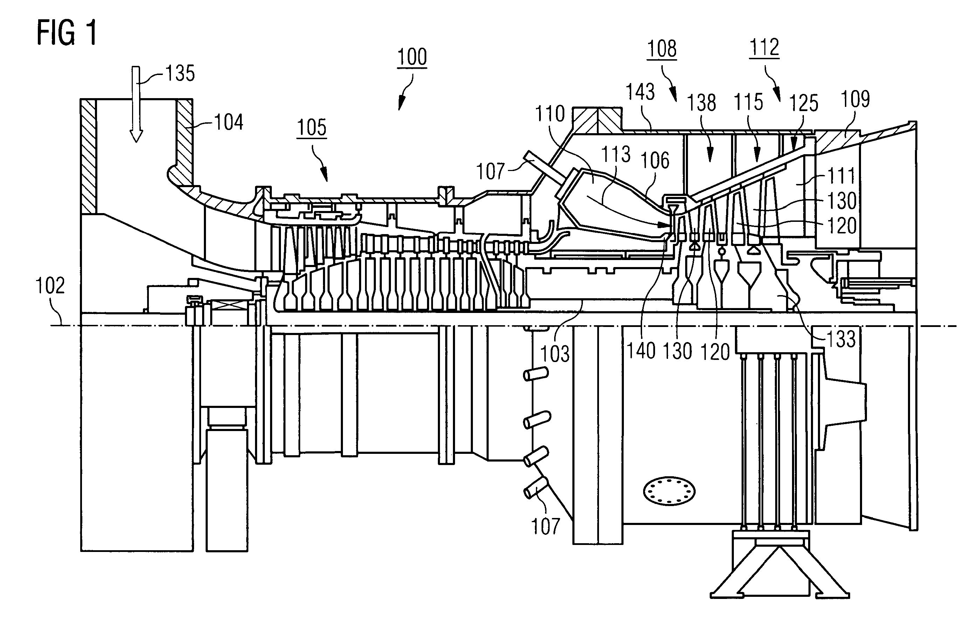

Die Figur 1 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

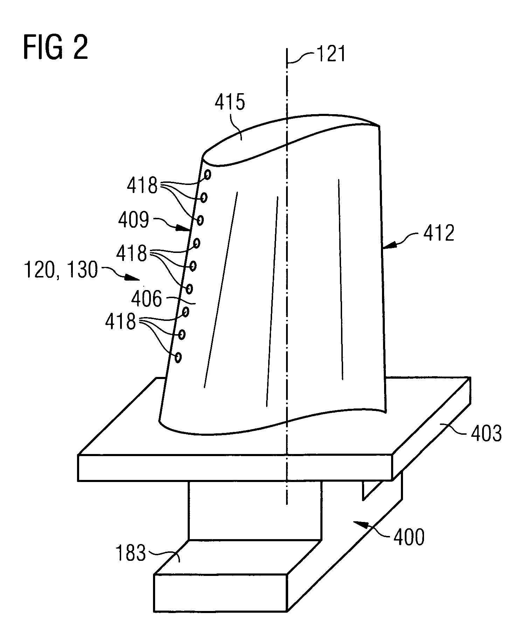

Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder stängelkristallinen Strukturen werden als Bauteile für Maschinen eingesetzt, die im Betrieb hohen mechanischen, thermischen und/oder chemischen Belastungen ausgesetzt sind. Die Fertigung von derartigen einkristallinen oder stängelkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen. Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber nur wenige transversale Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₃-ZrO₃, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

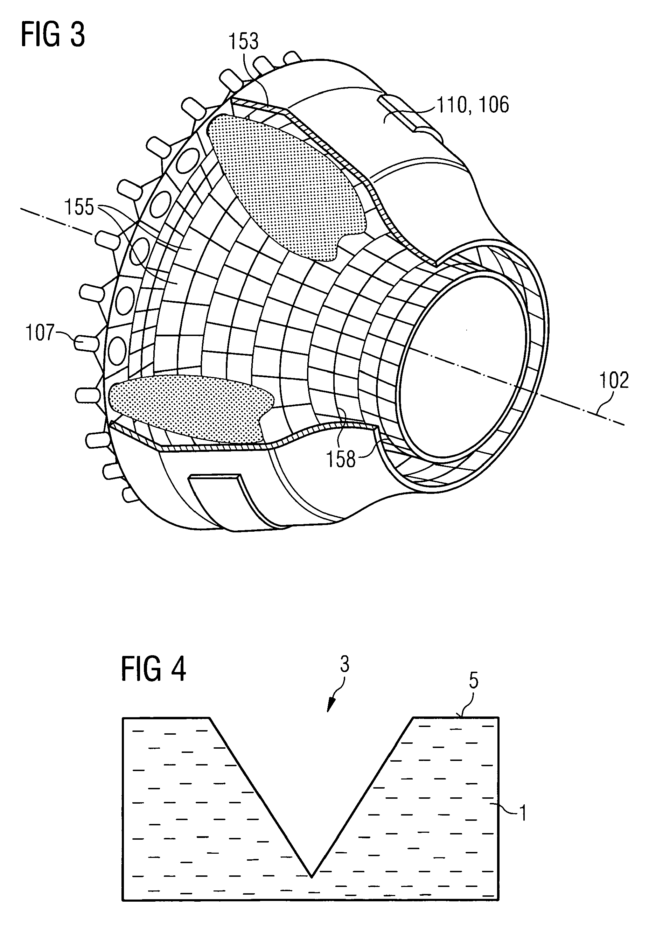

Die Figur 3 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können keramische Bauteile, massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

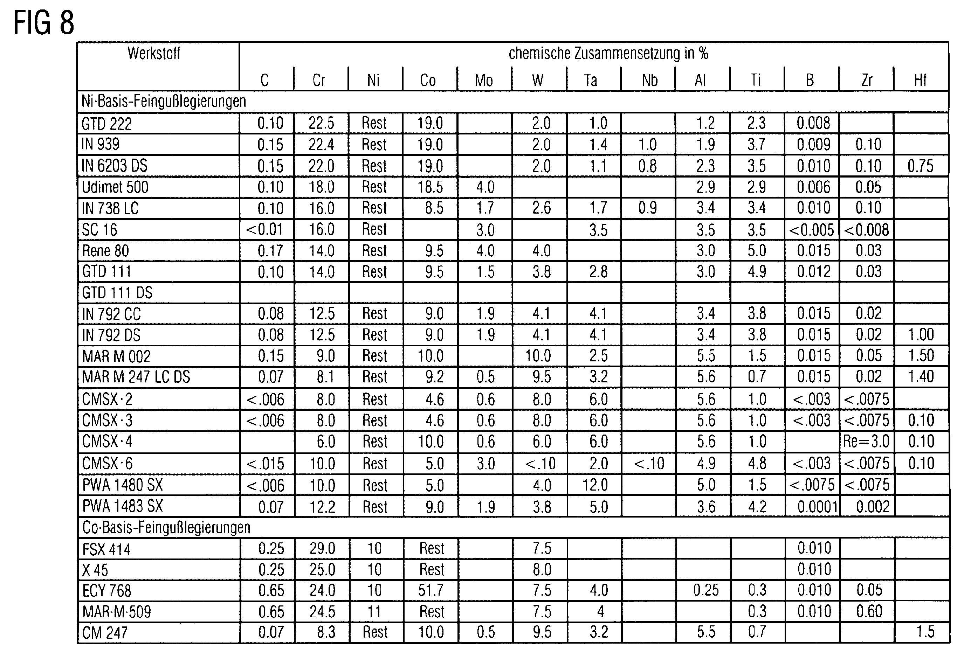

In Figur 4 ist in einer stark schematisierten Darstellung eine Gasturbinenschaufel 1 mit einem Riss 3 als zu reparierendem Bauteil dargestellt. Die Turbinenschaufel 1 ist aus einer Superlegierung auf Nickelbasis hergestellt, die neben dem Hauptbestandteil Nickel (Ni) die Elemente Chrom (Cr), Wolfram (W), Molybdän (Mo), Aluminium (A1), Tantal (Ta) und Rhenium (Re) enthält. Die Nickel-Basislegierung weist eine gerichtete Mikrostruktur mit einer vorteilhaften Orientierung auf, die in den Figuren 4 bis 7 durch waagrechte Striche angedeutet ist. Es sei an dieser Stelle angemerkt, dass bei einer stängelkristallinen Struktur eine Vorzugsrichtung der Kristallorientierung vorliegt, die jedoch keine streng eingehaltene Richtung darstellt. Vielmehr schwankt die tatsächliche Orientierung der einzelnen Körner der stängelkristallinen Struktur in der Regel um einige Grad um die Vorzugsrichtung. Eine derartige Schwankung bringt Vorteile bezüglich der Festigkeit des Materials mit sich. Der Riss 3 erstreckt sich von der Oberfläche 5 der Turbinenschaufel 1 ausgehend in die Superlegierung hinein. Zum Reparieren des Bauteils wird ein Lotmaterial 7 in Form eines Pulvers in den Riss 3 eingefüllt. Das Pulver weist im Durchschnitt dieselbe Zusammensetzung auf, wie die Superlegierung der Turbinenschaufel 1. Das Pulver ist jedoch nicht einheitlich aus Partikeln des Superlegieruhgsmaterials aufgebaut, sondern besteht aus verschiedenen Pulvern, die jeweils ein Element der Superlegierung (Beispiele siehe Figur 8) in Reinform enthalten. Weitere bevorzugte Beispiele sind PWA1483, PW1484 und Rene N5.

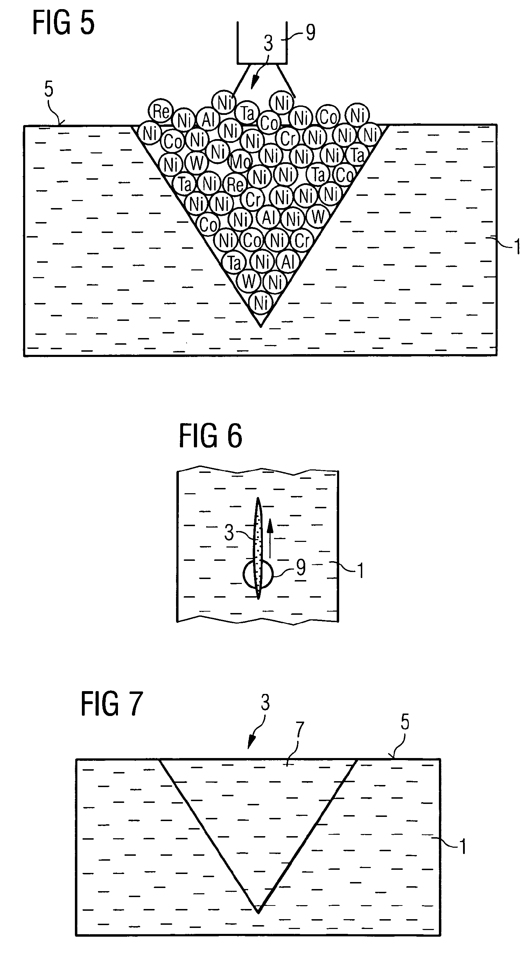

Der Legierungsprozess findet daher erst mit dem Aufschmelzen und Wiedererstarren des Lotmaterials statt. Die Turbinenschaufel 1 mit in den Riss 3 eingefülltem Lotmaterial 7 ist in Figur 5 dargestellt.

Nach dem Einfüllen des Lotmaterials 7 erfolgt eine lokale Wärmeeinwirkung im Bereich des verfüllten Risses 3. Um die Wärmeeinwirkung auf das Lot 7 zu verwirklichen, ist im vorliegenden Ausführungsbeispiel ein Laser 9 vorhanden, welcher auf das aufzuschmelzende Lot einstrahlt und diesem so die zum Schmelzen nötige Wärme zuführt. Alternativ kann die Wärme jedoch auch induktiv oder mittels eines Elektronenstrahls zugeführt werden.

Während des Lötvorganges wird ein Temperaturgradient im Bereich des Risses 3 hergestellt. Dies erfolgt, indem die Turbinenschaufel 1 und der Laser 9 relativ zueinander bewegt werden. Im Ausführungsbeispiel wird der Laser 9 parallel zur Oberfläche 5 der Turbinenschaufel 1 über das Lot 7 geführt (vgl. Figuren 5 und 6). Die Geschwindigkeit und die Leistungsdichte, mit der das Führen des Lasers 9 über das Lotmaterial 7 erfolgt, ist dabei derart gewählt, dass sich der gewünschte Temperaturgradient im Lotmaterial 7 einstellt. Der Temperaturgradient führt zu einem gerichteten Erstarren des Lotmaterials, wenn sich dieses nach dem Aufschmelzen wieder abkühlt. Mit der Bewegungsgeschwindigkeit des Lasers relativ zur Turbinenschaufel 1 und/oder der Laserleistung kann die Steilheit des Temperaturgradienten eingestellt werden. Unter Steilheit des Temperaturgradienten soll hierbei die Zu- oder Abnahme der Temperatur pro Längeneinheit zu verstehen sein. Die zum Entstehen einer gerichteten Mikrostruktur im erstarrenden Lotmaterial führende Steilheit hängt insbesondere von der Zusammensetzung des Lotmaterials ab.

Die Bewegung des Lasers 9 im dargestellten Ausführungsbeispiel erinnert an einen Schweißprozess. Im Unterschied zu einem Schweißprozess wird das umgebende Basismaterial der Turbinenschaufel 1 jedoch nicht aufgeschmolzen.

Im vorliegenden Ausführungsbeispiel erstreckt sich die vorteilhafte Orientierung der gerichteten Mikrostruktur in der Superlegierung der Turbinenschaufel 1 in der Zeichenebene von links nach rechts. Um im erstarrenden Lotmaterial das Entstehen einer gerichteten Mikrostruktur zu induzieren, deren Orientierung mit der im Basismaterial übereinstimmt, erfolgt die Bewegung des Lasers 9 relativ zur Gasturbinenschaufel 1 senkrecht zur Vorzugsrichtung der gerichteten Mikrostruktur der Superlegierung, parallel zum Verlauf des Ermüdungsrisses (vgl. Fig. 6). Ggf. kann der Laser 9 zusätzlich eine Pendelbewegung senkrecht zum Verlauf des Ermüdungsrisses ausführen.

Im erfindungsgemäßen Verfahren brauchen dem Lotmaterial 7 insbesondere keine die Schmelztemperatur senkenden Zusätze wie etwa Bor beigemischt zu sein. Aufgrund der Tatsache, dass das Lotmaterial aus reinen Phasen und/oder einer Vorlegierung der Legierungsbestandteile besteht, weisen die verschiedenen Pulver des Lotmaterials unterschiedliche Schmelztemperaturen auf. So schmilzt beispielsweise das Aluminium bereits bei einer Temperatur von 660°C, was weit unterhalb der Schmelztemperatur der Superlegierung (ca. 1200°C) liegt. Es entsteht daher für das Aluminium bereits bei relativ niedrigen Temperaturen ein transienter Flüssigkeitsfilm, der für eine optimale Anbindung des Lotmaterials an die angrenzende Superlegierung sorgt. Im weiteren Verlauf der Wärmeeinwirkung werden dann nach und nach alle Legierungsbestandteile in die sich im Spalt bildende Legierung eingebaut. Auf diese Weise kann auf die Zugabe des sonst zur Schmelzpunkterniedrigung notwendigen, aber schädlichen Bors verzichtet werden. Es sei an dieser Stelle angemerkt, dass obwohl im Ausführungsbeispiel alle Bestandteile des Lotmaterials Pulver aus reinen Elementen der Superlegierungsbestandteile sind, es grundsätzlich auch ausreicht, wenn wenigstens ein Bestandteil der Lotpulvermischung als Pulver eines reinen Elementes oder einer Vorlegierung vorliegt. Die übrigen Bestandteile der Lotpulvermischung können dann aus einer oder mehreren Legierungen bestehen, wobei die Pulvermischung im Mittel der Legierungszusammensetzung der umgebenden Superlegierung entspricht. Das reine Pulver bzw. die Vorlegierung sollte jedoch eine niedrige Schmelztemperatur als das Superlegierungsmaterial aufweisen.

Beim Wiedererstarren des Lotmaterials wird dieses epiktaktisch an das umgebende Superlegierungsmaterial angebunden. Mit anderen Worten, das erstarrende Legierungsmaterial 7 führt die kristalline Struktur des angrenzenden Superlegierungsmaterials fort. Nachdem das Lotmaterial 7 wieder erstarrt ist, weist es daher dieselbe gerichtete Mikrostruktur wie die angrenzende Superlegierung auf. Auf diese Weise kann die kristalline Struktur des Superlegierungsmaterials in das erstarrende Legierungsmaterial hineinwachsen. Nachdem das Lotmaterial 7 wieder erstarrt ist, weist die Reparaturstelle daher dieselbe gerichtete Mikrostruktur wie das umgebende Superlegierungsmaterial auf. Dieser Zustand ist in Figur 7 angedeutet.

Statt einem kontinuierlichen Bewegen des Lasers 9 zum Herbeiführen eines Temperaturgradienten ist es auch möglich, die Laserstrahlen so aufzuweiten oder den Laser so pendeln zu lassen, dass der Laser das gesamte Lotmaterial bestrahlt und dieses gleichmäßig erwärmt. In diesem Fall kann durch geeignete Abfuhr der Wärme des Lotmaterials 7 in die umgebende Superlegierung ein Temperaturgradient entstehen. Die Temperatur ist dann an der äußeren Oberfläche des Lotmaterials 7 am höchsten und nimmt zur Grenzfläche des Lotmaterials 7 mit der Superlegierung der Turbinenschaufel 1 ab. Um eine geeignete Abfuhr der Wärme zu realisieren, kann die Turbinenschaufel 1 gegebenenfalls an geeigneten Stellen gekühlt oder erwärmt werden, sodass sich im Lotmaterial 7 der gewünschte Temperaturgradient einstellt.

Im vorliegenden Ausführungsbeispiel wurde das Aufschmelzen und Erstarrenlassen des Lotmaterials 7 mit Hilfe eines Temperaturgradienten herbeigeführt. Alternativ besteht jedoch ggf. auch die Möglichkeit, den Lötvorgang unter Verwendung eines isotermen Lötverfahrens durchzuführen.

Das erfindungsgemäße Verfahren bietet nicht nur den Vorteil, dass auf die Schmelztemperatur absenkende Beimischungen zum Lotmaterial 7 verzichtet werden kann, sondern ermöglicht es auch, Risse mit einer Breite von mehr als 200 µm so zu reparieren, dass das Lotmaterial nach seiner Verfestigung eine gerichtete Mikrostruktur aufweist, insbesondere dann, wenn im Verfahren ein Temperaturgradient Verwendung findet.

## Patentansprüche

1. Verfahren zum Reparieren von Bauteilen (1),
die aus einer Superlegierung bestehen,
insbesondere zum Reparieren von Bauteilen (1),
die aus einer Superlegierung mit einer gerichteten Mikrostruktur bestehen, derart, dass eine reparierte Stelle ebenfalls eine gerichtete Mikrostruktur aufweist, mit den Schritten:
- Versehen der zu reparierende Stelle (3) mit einem Lotmaterial (7),
- Erwärmen der mit dem Lotmaterial (7) versehenen zu reparierenden Stelle (3) bis zum Schmelzen des Lotmaterials (7) und
- Erstarrenlassen des geschmolzenen Lotmaterials (7), wobei als Lotmaterial (7) eine in ihrer Durchschnittszusammensetzung der Legierung des Bauteils (1) entsprechende Pulvermischung zur Anwendung kommt, die wenigstens als eine Pulversorte ein elementares Pulver der Legierung des Bauteils (1) und/oder eine Vorlegierung der Legierung des Bauteils (1) umfasst.

2. Verfahren nach Anspruch 1,
in dem das Lotmaterial ausschließlich aus elementaren Pulvern zusammengesetzt ist, welche jeweils aus einem Element der Legierung des Bauteils (1) bestehen.

3. Verfahren nach Anspruch 1,
in dem das Lotmaterial (7) ein Pulver aus einer Vorlegierung umfasst die einige Legierungsbestandteile der Legierung des Bauteils (1) enthält.

4. Verfahren nach einem der Ansprüche 1 bis 3,
in dem die Superlegierung eine Superlegierung auf Nickel-, Kobalt- oder Eisenbasis ist.

5. Verfahren nach einem der Ansprüche 1 bis 4,
in dem das Erstarrenlassen des geschmolzenen Lotmaterials (7) bei konstant gehaltener Temperatur erfolgt.

6. Verfahren nach einem der Ansprüche 1 bis 5,
in dem das Erstarrenlassen des geschmolzenen Lotmaterials (7) unter Verwendung eines Temperaturgradienten erfolgt.

7. Verfahren nach Anspruch 6,
in dem der Temperaturgradient derart ausgerichtet ist, dass er in derjenigen Richtung verläuft, in der ein epitaktisches Wachstum in der zu reparierenden Stelle (3) herbeigeführt werden soll.

8. Verfahren nach Anspruch 6 oder 7,
in dem ein lokales Heizen mittels eines optischen oder induktiven Heizverfahrens oder eines Elektronenstrahlheizverfahrens erfolgt, wobei die Heizquelle (9) und das Bauteil (1) relativ zueinander bewegt werden.

9. Lotmaterial zum Löten von Bauteilen (1),
die aus einer Superlegierung bestehen, insbesondere aus einer Superlegierung mit einer gerichteten Mikrostruktur, wobei das Lotmaterial (7) eine in ihrer Durchschnittszusammensetzung der Legierung des Bauteils (1) entsprechende Pulvermischung ist, die wenigstens als eine Pulversorte ein elementares Pulver der Legierung und/oder eine Vorlegierung des Bauteils (1) umfasst.

10. Lotmaterial nach Anspruch 9,
welches ausschließlich aus elementaren Pulvern zusammengesetzt ist, die jeweils aus einem Element der Legierung des Bauteils (1) bestehen.

11. Lotmaterial nach Anspruch 9,
in dem das Lotmaterial (7) ein Pulver aus einer Vorlegierung umfasst, die einige Legierungsbestandteile der Legierung des Bauteils (1) enthält.

12. Verfahren nach einem der Ansprüche 9 bis 11,
in dem die Superlegierung eine Superlegierung auf Nickel-, Kobalt- oder Eisenbasis ist.
